# EUROPÄISCHE PATENTSCHRIFT

(11) **EP 2 890 259 B1**
(45) Veröffentlichungstag und Bekanntmachung des Hinweises auf die Patenterteilung: **15.05.2019**
(21) Anmeldenummer: 13736759.5
(22) Anmeldetag: 27.06.2013
(51) Int. Cl.: A43B 1/00

(54) **FÜLLSTOFFMISCHUNG FÜR DIE HERSTELLUNG VON THERMOPLASTISCHEN SCHUHVERSTEIFUNGSMATERIALIEN**
FILLER MIXTURE FOR THE PRODUCTION OF THERMOPLASTIC SHOE REINFORCEMENT MATERIALS
MÉLANGE DE MATIÈRE DE REMPLISSAGE UTILISÉ POUR PRODUIRE DES MATÉRIAUX THERMOPLASTIQUES DE RENFORCEMENT DE CHAUSSURE

(30) Priorität: 05.07.2012 DE 102012013432
(43) Veröffentlichungstag der Anmeldung: 08.07.2015
(73) Patentinhaber: Rhenoflex GmbH, 67065 Ludwigshafen (DE)
(72) Erfinder: JÄRGER, Henriette, 67259 Heuchelheim (DE); FIEBIGER, Markus, 67259 Grossniedesheim (DE); BUSALT, Werner, 68519 Viernheim (DE)
(74) Vertreter: Jendricke, Susann
(86) Internationale Anmeldenummer: PCT/EP2013/001894
(87) Internationale Veröffentlichungsnummer: WO 2014/005684

(56) Entgegenhaltungen:
- WO-A1-2010/127781
- WO-A2-2011/098842
- WO-A2-2012/099357
- US-A1- 2004 150 136

## Beschreibung

Die vorliegende Erfindung betrifft eine Füllstoffmischung für die Herstellung von thermoplastischen Versteifungsmaterialien für die Schuhindustrie, in erster Linie von Vorder- und Hinterkappen

Die Pulvermischung besteht aus einem Biokunststoff und einem speziell ausgewählten, nachwachsenden Naturstoff.

Die Herstellung von Schuhversteifungsmaterialien mit der erfinderischen Füllstoffmischung kann sowohl auf einer Doppelbandanlage, als auch durch Extrusion, insbesondere auch durch Coextrusion erfolgen.

In DE 26 21 195 C werden Versteifungsmaterialien beschrieben, die als Flächenware/Plattenware hergestellt werden. Dabei wird ein textilartiges Trägermaterial mit pulverförmigen, schmelzbaren Kunststoffmaterial, welches auch Füllstoffe enthält, beschichtet. Als schmelzbare Kunststoffe werden Polyethylen, Vinylacetat und ihre Copolymeren, als geeignete Füllstoffe beispielsweise Holzmehl oder Kreidepulver eingesetzt. Ziel der Erfindung war, den Anteil an Füllstoffen in der Beschichtung zu erhöhen, dabei aber die Biegefestigkeit und Steifigkeit des Materials zu erhalten. Es wurde gefunden, dass man den Füllstoffanteil bis auf 50% steigern kann, wenn die Korngrößenverteilung von Kunststoff- und Füllstoffpulver ähnlich oder vergleichbar ist. Dabei können die aufgeschmolzenen Kunststoffteilchen die Füllstoffteilchen vollständig umhüllen, so dass sich auch die Füllstoffe wie Kunststoffe benehmen. Diese Materialien weisen keine ausreichenden Klebeeigenschaften auf, so dass sie noch mit einer oberflächlich aufgebrachten Kleberschicht versehen werden müssen, um sie dauerhaft mit dem Schaftmaterial des Schuhs verkleben zu können.

In EP 183 912 B2 wurden Schuhversteifungsmaterialien beschrieben, welche bereits direkt, ohne zusätzlichen Klebstoff mit dem Schuhleder verklebbar sind. Als Heißschmelzkleber wurden dort Polycaprolacton-Typen eingesetzt, welche aufgrund ihres niedrigen Schmelzpunktes von ca. 60°C besonders geeignet waren. Als Füllstoffe wurden Kunststoffpulver oder mit Kunststoff ummantelte organische oder anorganische Pulver, welche sich in dem Heißschmelzkleber nicht lösten, eingesetzt. Je nach Anforderung wurden diese Materialien ein-oder beidseitig noch mit einem Trägermaterial versehen.

Nachteilig bei diesen bekannten Materialien war die häufige Notwendigkeit der Verwendung eines Trägermaterials, um den Verbund und den Zusammenhalt des Materials bei höheren Temperaturen zu erhalten und die bei der maschinellen Fertigung des Schuhverbundes erforderliche Festigkeit im warmen Zustand zu erhalten bzw. zu erreichen. Da die Schuhkappen aus den Flächenbahnen durch Stanzen und Schärfen hergestellt werden, entsteht immer Schärf- und Schnittabfall. Wegen der dort noch anhaftenden Trägermaterialresten konnte dieser Abfall nicht wieder in den Herstellungsprozess zurückgeführt werden.

In EP 1 525 284 B1 welche eine Heissschmelzkleber/Füllstoffmischung Compound beschrieb, konnten einige der oben erwähnten Nachteile überwunden werden. Dieser Heissschmelzkleber/Füllstoffmischung Compound, hatte aufgrund der genau eingestellten physikalischen Parameter, wie melt volume index. Längenausdehnung, Viskosität, Oberflächenklebrigkeit oder auch "Tack, u.a., eine ausreichende Eigenstabilität, um ohne Trägermaterial verarbeitet zu werden. Dies wurde durch die genaue Einstellung der erwähnten Parameter der eingesetzten Rohstoffe erreicht. So musste der Heißschmelzkleber einen MVI-Wert gemessen bei 100°C, 21,6kg nach DIN ISO 1133) von 2-300, vorzugsweise 10-30cm³/10min aufweisen. Auch das Mengenverhältnis von Heißschmelzkleber zu Füllstoff musste 50-95 Gew.-% zu 50-5 Gew % Füllstoff betragen. Die hier eingesetzten Füllstoffe, sphärische, vielkantige Partikel mit einer Korngröße von 10-500 µm, waren. sowohl organische, natürliche, als auch anorganische, mineralische Füllstoffe. Auch aus diesen Materialien wurden z.B. nach einer Extrusion Flächenbahnen hergestellt, aus denen durch Stanzen und Schärfen die entsprechenden dreidimensionalen Versteifungsteile hergestellt werden konnten, wobei die Schärf- und Stanzabfälle dieser Materialien die gleiche Zusammensetzung, wie die Ausgangsstoffe hatten und konnten daher problemlos wieder in den Extruderprozeß eingebracht werden. Nachteilig bei diesen Materialien war jedoch der vergleichsweise hohe Anteil an Heißschmelzkleber, um den inneren Zusammenhalt des Compounds zu ermöglichen. Vor allem bei höheren Temperaturen konnte es bei geringeren Heißschmelzkleberanteilen passieren, dass sie in der Längsrichtung auseinandergingen oder nach dem Erkalten bzw. Verfestigen brüchig wurden.

Bei der TW 201008765 handelte es sich um eine Methode, umweltfreundliche Laufsohlen aus recycelten Reisschalen, Weizenspelzen und ähnlichen Pflanzenstoffen als Zusatzstoff herzustellen. Diese Rohstoffe werden gesiebt, dann mit natürlichem Kautschuk maschinell gleichmäßig gemischt und zu umweltfreundlichen Materialblättchen mit einer entsprechenden Dicken geformt.. So entsteht ein Material für Gummilaufsohlen, das Reisschalengranulat enthält und sehr gute physikalische Eigenschaften aufweist. Durch dieses Herstellungsverfahren konnten umweltfreundliche Laufsohlen mit guten Gebrauchseigenschaften hergestellt werden.

Bei der TW 45548 B handelte es sich um ein "Schuhherstellungsverfahren mit Reisschalen", das hauptsächlich ein Styropor-Abfall Material bis zu 13 Gew.-% Anteil am gesamten Schuhwerk, neben den Reisschalen enthält.

In der WO 2011/098842 wurden Polymilchsäure- und derivate für eine umweltfreundliche und biologisch abbaubare Verpackung, welche vor allem in der Nahrungsmittelindustrie, Verwendung fand, hergestellt. Die Zusammensetzung aus Polymeren, wie thermoplastische Polyhydroxyalkanoate (PHA) und Polyhydroxybutyrate (PHB) und anorganischem Füllstoff, z. B. nano--Calciumcarbonate. sowie organische Füllstoffe, z. B. pulverförmiges Stroh, Zuckerrohrblätter, Palmblätter oder Reishüllen bis zu einer Korngröße von 20 µm, hatten verbesserte thermische Isolationsfähigkeit. Eine typische Zusammensetzung z. B. bestand aus 71 % Polymilchsäure (PLA), 9 % PHB und 20 % nano-Calciumcarbonat. Diese Materialien waren als thermoplastische Schuhversteifungsmaterialien nicht geeignet.

Es ist aus WO 2010/127781 A1 eine Füllmischung bekannt, die geeignet ist für die Herstellung von thermoplastischen Schuhversteifungsmaterialien.

Es stellte sich daher die Aufgabe, weitere, verbesserte, Schuhversteifungsmaterialien, für die Schuhkappenherstellung, sowie dazu geeignete Herstellungsverfahren zu finden. Diese Schuhversteifungsmaterialien sollten neben verbesserter Biegefestigkeit, Längenausdehnung, Oberflächenklebrigkeit, sowie Schälfestigkeit, auch gute biologische Abbaubarkeit und Recylingsfähigkeit, aufweisen. Vor allem sollen die Materialien ökonomisch und ökologisch herstellbar sein.

Deshalb bestand die Aufgabe vor allem darin, geeignete Füllstoffmischungen als Rohstoffe zu finden, welche einerseits natürlich nachwachsende Rohstoffe sind, insbesondere pflanzlicher Herkunft und andererseits aber Biokunststoffe enthalten und beide bis zu 75 Gew. % bezogen auf den Heißschmelzkleberanteil als Füllstoffe einsetzbar sind, ohne daß das fertige thermoplastische Versteifungsmaterial beim Ein- und Verarbeiten, instabil wird, vor allem in der Wärme auseinander fällt.

Die obige Aufgabe konnte überraschenderweise durch eine Füllstoffmischung, welche auch mit den bekannten Heißschmelzklebern kompatibel ist, gelöst werden. Diese Mischung besteht aus dem Biokunststoff, Polymilchsäure - Pulver bzw. recyceltes Polymilchsäure Pulver (poly lactic acid oder PLA) und einer speziell ausgewählten Pflanzenfaser, nämlich gereinigten Reisschalen. Als Methoden der Herstellung haben sich neben der konventionellen Pulverbeschichtungstechnik, auf einer Doppelbandanlage, vor allem die Extrusion oder die Coextrusion in einem Mehrkanalextruder, besonders bewährt, welche erlauben, die erfinderische Füllstoffkombination bis zu einer Menge von 75 Gew.- %, zu verarbeiten, ohne dabei die notwendigen Materialeigenschaften, wie Thermostabilität, die Biegefestigkeit und die Oberflächenklebrigkeit zu verlieren. Im Gegenteil, die so hergestellten Produkte weisen alle in der Praxis geforderten Eigenschaften auf und sind daher besonders gut als Schuhversteifungsmaterialien, als Schuhkappen, geeignet.

Die Füllstoffkomponente Polymilchsäure, bzw. die recycelte Polymilchsäure, im weiterem als PLA oder r-PLA bezeichnet, ist biologisch gut abbaubar. In der Industrie wird PLA schon in sehr vielen unterschiedlichen Anwendungen verarbeitet. Bekannt sind Verwendungen von PLA in der Verpackungsindustrie, Lebensmittelindustrie, Landwirtschaft, Gartenbau, Medizintechnik, Sport- und Funktionskleidung, als Verbundstoffe. PLA gehört zu den Biokunststoffen, ist aber auch ein nachwachsender Rohstoff, weil zunächst die Milchsäure ursprünglich aus Zucker und Maisstärke gewonnen wird, und später durch Polymerisation daraus die die Polymilchsäure hergestellt wird.

Bei Biokunststoffen handelt es sich nicht um eine einheitliche Polymerklasse, sondern um eine große Familie unterschiedlichster Kunststoffarten. Dabei wird der Begriff unterschiedlich verstanden: Zum einen werden unter Biokunststoffen biologisch abbaubare Kunststoffe verstanden, zum anderen Kunststoffe, die primär auf Basis von Agrarrohstoffen hergestellt werden. In den meisten Fällen überschneiden sich beide Definitionen.

Eine Besonderheit der PLA ist, dass sie biologisch unter bestimmten Umweltbedingungen in industriellen Kompostieranlagen gut abbaubar ist, unter industriellen Kompostbedingungen vollzieht sich der Abbau innerhalb weniger Monate.

Im Rahmen der vorliegenden Erfindung wird eine recycelte Polymilchsäure, r-PLA, in Pulverform bevorzugt verwendet.

Beide Füllstoffe, PLA und/oder die r-PLA, sowie die Reisschalen, bilden eine vorteilhafte Füllstoffmischung in Kombination mit den in der Schuhherstellung bereis eingesetzten thermoplastischen Heißschmelzklebern, wie Polycaprolacton-Typen (Capa Typen) oder thermoplastischen Polyurethanen (TPU's) oder Ethylenvinylacetaten (EVA). Die Füllstoffmischung ist mit allen diesen, aber auch mit vielen weiteren thermoplastischen Heißschmelzklebern, kompatibel und problemlos zu Folien, Flachbahnen oder Platten verarbeitbar. Diese Materialien können optional auch ein-oder beidseitig mit einem Trägermaterial beschichtet werden.

Diese Flachbahnen, Platten oder Folien können dann in Stanzmaschinen zu Formteilen gestanzt und als solche in der Schuhproduktion als dreidimensionale Formteile, als Hinter-oder Vorderkappen, verwendet werden. Die Reisschalen als natürlich nachwachsende pflanzliche Stoffe, welche durch Schälen des Reiskorns gewonnen werden, können ggfls. auch ohne Trocknung als Füllstoffmaterialien eingesetzt werden.

Die erfindungsgemäß eingesetzten Rohstoffe haben folgende physikalischen Eigenschaften:
a. Poly-ε-caprolacton-Typen oder auf Polycaprolacton-basierende Polyurethane, pulverförmig, mit einem Molekulargewicht von 40.000 - 80.000 g/mol, und einem MFI Wert zwischen 2,5 und 31, je nach Typ gemessen bei 100 bzw.160 °C/2,16 kg, die Korngrößenverteilung bewegt sich zwischen 50 bis 1000 µm.
b. Thermoplastische Polyurethane oder TPU's in Pulverform mit einem melt flow index (MFI) von 10 - 50 g/10min - vorzugsweise 25 - 40g/10min (bei 190°C/2,16 kg), die Korngrößenverteilung bewegt sich zwischen 50 bis 1000 µm.
c. Ethylen-Vinylacetat Copolymer (EVA) in Pulverform, mit einem MFI= 20 - 50 g/10min + VA-Anteil (=Vinyl-Acetat-Anteil) von 20-40 Gew.-%, die Korngrößenverteilung bewegt sich zwischen 50 bis 1000 µm.
d. Reisschalen -Pulver mit einer Korngröße von 1 bis 3000 µm, vorzugsweise von 20 - 800 µm
e. Polymilchsäure-Pulver und/oder r-PLA Pulver mit einem MFI= 2 - 40 g/10min bei 190°C/2,16 kg, mit einer Korngrößenverteilung von 50 bis 1000 µm und einer Restfeuchte von max. 2500 ppm.
f. Als Trägermaterialien können sowohl ein wasserstrahlverfestigtes, perforiertes/unperforiertes Polyestervlies mit einem Flächengewicht von 10 - 120g/m² oder ein Baumwoll- bzw. Baumwollmischgewebe mit einem Flächengewicht von 25 -120 g/m² eingesetzt werden.

Der Einsatz eines Trägermaterials ist immer optional.

Die Messung des melt flow indexes (MFI) erfolgt nach der Vorschrift der DIN EN ISO 1133.

Die Biegefestigkeit der getesteten Produkte wurde nach DIN EN ISO 20864 (Domtest) gemessen.

Die nachfolgenden Beispiele verdeutlichen die Erfindung näher, ohne sie nur auf diese Beispiele zu beschränken.

Die Herstellung der erfindungsgemäßen thermoplastischen Versteifungsmaterialien kann durch Extrusion, oder Coextrusion, aber auch mittels Pulverbeschichtungsverfahren auf einer Doppelbandanlage erfolgen.

### Herstellungsbeispiele auf einer Doppelbandanlage

Vorab werden die pulverförmigen Rohstoffe, die Reisschalen und die r-PLA, anteilsmäßig miteinander zu einer homogen Pulvermischung vermischt, ggfls. auch agglomeriert Diese Mischung wird auf einer Doppelbandanlage verarbeitet.

Die Doppelbandanlage besteht aus einem endlos umlaufendem Oberband, sowie einem gleichartigen Unterband, wobei sich zwischen den beiden Bändern ein sich einstellbarer Spalt bildet. Innerhalb dieses Spaltes wird die Pulvermischung bei vorgegebenen Druck- und Temperaturwerten aufgegeben und verfilmt. Die Wärme für die Verfilmung wird durch Heizplatten erzeugt. Die Verfilmung bedeutet, dass die Mischung in einem kontinuierlichem Durchlaufverfahren aufgeschmolzen wird, dann in die Flachform gepresst und nach Abkühlung anschließend ausgehärtet wird.

Sollte es Bedarf bestehen, das Material ein- oder beidseitig mit einem Trägermaterial zu versehen, kann man die Pulvermischung pur oder auf ein Trägermaterial aufgeben und so bearbeiten.

Der Unterschied zur Doppelbandanlage besteht dann darin, dass die Wärme mit einem Heizstrahler oder Infrarotstrahler erzeugt wird und die Verdichtung des Pulvers durch Kalanderwalzen anstelle von Ober- oder Unterband, geschieht. In der Tabelle 1 kann man die Messwerte der auf einer Doppelbandanlage hergestellten Versteifungsmaterialien entnehmen.

Dort wurden folgende erfinderische Zusammensetzungen getestet:
1. 50 Gew.- Reisschalenagglomerat-Pulver, bestehend aus 50 Gew.-% Reisschalen mit 50 Gew.-% EVA-Pulver, sowie 15 Gew.-% Poly-Caprolacton Pulver und 10 Gew. % EVA-Pulver, mit 25 Gew.-% r-PLA Pulver, alles homogen gemischt.
2. 25 Gew.-% Reisschalenagglomerat-Pulver mit 25 Gew.-% r-PLA Pulver, wurden mit 5 Gew.-% EVA Pulver und 45 Gew.-% Polycaprolacton Pulver homogen gemischt.
   Als Vergleich wurden die Zusammensetzungen nach Patent WO 2011/098842 in derselben Weise, wie die erfinderischen Zusammensetzungen, gemessen.

### Herstellungsbeispiele des erfindungsgemäßen Versteifungsmaterials nach dem Extrusions -oder Coextrusionsverfahren:

Sowohl die einfache Extrusion, als auch die Coextrusion, kann bei der Herstellung von Schuhversteifungsmaterialien sehr vorteilhaft eingesetzt werden.

In beiden Verfahren können die unten vorgestellten Beispiele bzw. Rezepturen eingesetzt werden.

Demnach können gegebenenfalls die gereinigten Reisschalen und r-PLA, beide zusammen in Mengen von 50 bis 75 Gew.-%, sowie die thermoplastischen Heißschmelzkleber, in Mengen von 25 bis 50 Gew.-%, einer Voragglomerierung unterworfen werden.

### Herstellungsbeispiel 1.

15 Gew.-% thermoplastisches Polyurethan mit einem MFI Wert von 1-25 g/10 min, gemessen bei 150 °C, 10 kg, 10 Gew.-% Ethylenvinylacetat Copolymer mit einem VA Gehalt von 20 bis 40 Gew.-% und 20 Gew,-% lineares Polyester Poly-ε-caprolacton mit einer Molekulargewichtsverteilung von 40 bis 80.000, sowie 40 Gew.-% recyceltes Polymilchsäure Pulver und 15 Gew.% Reisschalen-Pulver mit einer Korngröße von 400 bis 800 µm, werden voragglomeriert und dann im Extruder weiterverarbeitet.

### Herstellungsbeispiel 2.

10 Gew.-% Ethylenvinylacetat Copolymer mit einem VA Gehalt von 20 bis 40 Gew.-% und 40 Gew,-% lineares Polyester Poly-ε-caprolacton mit einer Molekulargewichtsverteilung von 40 bis 80.000 werden mit 35 Gew.-% recycelte Polymilchsäure Pulver und 15 Gew.% Reisschalen-Pulver werden voragglomeriert und dann im Extruder weiterverarbeitet.

### Herstellungsbeispiel 3.

20 Gew.-% thermoplastisches Polyurethan mit einem MFI Wert von 1-25 g/10 min, gemessen bei 150 °C, 10 kg, 10 Gew.-% Ethylenvinylacetat Copolymer mit einem VA Gehalt von 20 bis 20 Gew.-% werden mit 45 Gew.-% recyceltem Polymilchsäure Pulver mit einem MFI (melt flow index) von 15-35 g/10 min und 15 Gew. % Reisschalen Pulver mit einer Korngröße von 350 bis 700 µm werden voragglomeriert und dann im Extruder weiterverarbeitet.

### Herstellungsbeispiel 4.

50 Gew.-% Reisschalenagglomerat, erhalten als Agglomerat aus 50 Gew.-% Reisschalen und 50 Gew.-% EVA, sowie weiteren 10 Gew.-% EVA und 25 Gew.-% r-PLA-Granulat und 15 Gew.-% Polycaprolacton

### Vergleichsbeispiele:

### Vergleichsbeispiel 1

25 Gew.-% Ethylenvinylacetat Copolymer mit einem VA Gehalt von 20 bis 40 Gew.-% und 45 Gew.-% lineares Polyester Poly-ε-caprolacton it einer Molekulargewichtsverteilung von 40 bis 80.000 werden mit 30 Gew.-% Holzpulver mit einer Schüttdichte von ca.25 g/ml einer Restfeuchte von kleiner als 9 % und dann im Extruder weiterverarbeitet.

### Vergleichsbeispiel 2.

10 Gew.-% Ethylenvinylacetat Copolymer mit einem VA Gehalt von 20 bis 40 Gew.-% und 60 Gew.-% lineares Polyester Poly-ε-caprolacton mit einer Molekulargewichtsverteilung von 40 bis 80.000 werden mit 30 Gew.-% Holzpulver mit einer Schüttdichte von ca. 25 g/ml einer Restfeuchte von kleiner als 9 % und dann im Extruder weiterverarbeitet.

Wenn die Herstellung der erfindungsgemäßen Versteifungsmaterialien nach dem Coextrusionsverfahren erfolgt, so ist der Einsatz eines Mehrkanalextruders die Maschine der Wahl.

Bei der Coextrusion müssen mehrere Schmelzströme mit unterschiedlichen Durchsätzen (Schichtdicken) und unterschiedlichen Fließeigenschaften, zunächst in einem gemeinsamen Fließkanal eingespeist werden und dann gemeinsam durch diesen Kanal fließen. Bei der Zusammenführung der einzelnen Schmelzschichten und dem gemeinsamen Fließen der Schmelzschichten nach der Zusammenführung können sog. Fließphänomene auftreten, die zu Problemen bei der Coextrusion führen können.

Aus diesem Grunde muss bei der Herstellung der erfindungsgemäßen Versteifungsmaterialien mit einem Mehrkanal-Werkzeug gearbeitet werden.

Bei einem Mehrkanalwerkzeug wird jede Schmelzschicht in einem eigenen Fließkanal ausgeformt. Die Schmelzverteilung jeder einzelnen Schicht kann über die Breite durch Staubalken korrigiert werden. Erst im Bereich der Bügelzone, das ist der Bereich kurz vor dem Austreten der Schmelze aus der Düse, fließen die einzelnen Schmelzströme zusammen. Die Dickenverteilung des Gesamtverbundes kann durch Verstellen des Austrittspaltes korrigiert werden.

Die relativ kurze Fließweglänge der Gesamtschicht im Austragsbereich ist von Vorteil, um Schmelzumlagerungen bzw. das ineinanderfließen der Schmelzschichten zu vermeiden. Unter diesem Aspekt ist die Herstellung von den erfindungsgemäßen Versteifungsmaterialien mit großen Schichtdickenunterschieden sowie aus Materialkombinationen mit großen Unterschieden in den Fließeigenschaften mit einem Mehrkanalwerkzeug optimal realisierbar.

Für diese Anwendung sollte ein Mehrkanalwerkzeug mit 3 Kanälen verwendet werden.

Das Endprodukt nach der Coextrusion hat einen 3 schichtigen Aufbau, bestehend aus einem "Kern", der aus der Füllstoffmischung , speziell aus Reisschalen und r-PLA, sowie Heißschmelzkleber, besteht, sowie aus 2 äußeren Klebeschichten aus den thermoplastischen Heißschmelzklebern.

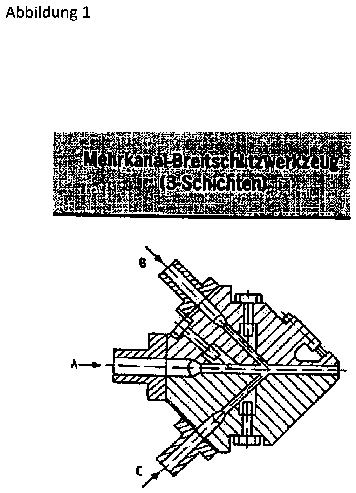

So kann der Kern, in der Abbildung 1 der Schmelzstrom A, z.B. aus 50 Gew.-% r-PLA und 25 Gew.-% Reisschalen, sowie 25 Gew.-% EVA bestehen und die beiden äußeren Klebschichten, gemäß Abbildung 1 die Schmelzströme B und C, können aus EVA, thermoplastischem Polyurethanen oder Polyestern, z. B. Polycaprolactonen, welche zusammen in einer Menge von ca. 10 bis 250 g pro m² auf die Oberfläche dieses Kernes aufgebracht werden. Die Dicke dieser Klebeschichten kann sich von 0,1 bis 2 µm bewegen. Die Füllstoffmischung die den "inneren Kern" bildet, kann vor der Extrusion gegebenenfalls auch voragglomeriert werden.

Besonders vorteilhaft ist die Coextrusion dann, wenn der innere Kern bis zu 75 Gew.-% Füllstoffmischung enthält, denn dadurch kann die Menge der Heißschmelzkleber im Kern erniedrigt werden, was erheblichen ökonomischen Vorteile hat. Das Mengenverhältnis von (Füllstoffe im Kern) : (Kleber im Kern) kann daher bis 3:1 betragen.

Diese Materialzusammensetzung im Kern, der 3schichtige Aufbau und die Variation der Schichtdicke bzw. Klebermenge in den äußeren Schichten, ermöglichen es, je nach Bedarf, unterschiedliche Steifigkeiten und Biegefestigkeiten zu realisieren und es hat auch Vorteile beim Einbringen und Handling der Schuhkappen in den Schuh während der Schuhproduktion.

Ein Beispiel eines sog. Mehrkanal Extruders ist in der Abbildung 1 zu sehen.

**TABELLE 1**

| **Rezepturen** | **Dicke** | **Gewichte** | **Biegesteifigkeit** | **Reißwerte** | **Dehnung** | **Domtest** | | **Abschälwerte** |
|---|---|---|---|---|---|---|---|---|
| | **[mm]** | **[g/m²]** | **[mN]** | **[N] (10x2)** | **[%]** | **Flächenformhaltwert (nach 10x drücken)** | **Eindrucklast** | **[N/cm]** |
| | | | | | | | | |
| **nach** WO2011/098842 | 1,03 | 1213-1217 | 4844-4900 | 550-650 | 2,5-3,6 | 68% | 18 N | 0,0 N |
| **nach** WO2011/098842 | 1,01 | 1190-1210 | 5800-5825 | bricht | nicht messbar | bricht | bricht. | 0,0 N |

| | **Erfinderische Rezepturen** | | | | | | | |
|---|---|---|---|---|---|---|---|---|
| **Beispiel 1** | 1,10 | 1177 | 1810 - 1911 | 211 - 252 | 2,4 - 3,1 | 64% | 108 N | 13 - 15 |
| **Beispiel 2** | 1,00 | 1028 | 1300 - 1440 | 340 - 350 | 10 - 10,5 | 61% | 88 N | 18- 20 |

**TABELLE 2**

| **Rezepturen** | **Dicke** | **Gewichte** | **Biegesteifigkeit** | **Reißwerte** | **Dehnung** | **Domtest** | | **Abschälwerte** |
|---|---|---|---|---|---|---|---|---|
| | **[mm]** | **[g/m²]** | **[mN]** | **[N]** (**10x2)** | **[%]** | **Flächenformhaltwert (nach 10x drücken)** | **Eindrucklast** | **[N/cm]** |
| | | | | | | | | |
| **Vergleichsbeispiel 1** | 1,1 | 1128 - 1147 | 851 - 852 | 265 - 272 | 15-20 | 57% | 69 N | 11 N-13 N |
| **Beispiel 1 gemäß Erfindung** | 1,1 | 1200 - 1238 | 771 - 896 | 260 - 268 | 15-20 | 72% | 71 N | 12 N -15 N |
| **Beispiel 4 gemäß Erfindung** | 1,10 | 1177 | 1810 - 1911 | 250 - 260 | 10-15 | 81% | 108 N | 13 N- 15 N |
| | | | | | | | | |
| **Vergleichsbeispiel 2** | 1,1 | 1120 - 1166 | 1095 - 1137 | 260 -270 | 10-12 | 74% | 88 N | 13 N -15 N |
| **Beispiel 2 gemäß Erfindung** | 1,1 | 1170 - 1185 | 1346 - 1353 | 281 - 289 | 10-12 | 89% | 88 N | 14 N - 20 N |
| **Beispiel 3 gemäß Erfindung** | 1,03 | 1116-1139 | 1003 - 1067 | 313-328 | 17-19 | 72% | 86 N | 14 N -20 N |
| | | | | | | | | |

## Patentansprüche

1. Füllstoffmischung für die Herstellung von thermoplastischen Schuhversteifungsmaterialien, welche thermoplastische Heizschmelzkleber enthalten, **dadurch gekennzeichnet, dass** sie aus:
a. Reisschalen Pulver in einer Menge bis zu 50 Gew.- %
b. Polymilchsäure Pulver bis zu 70 Gew. %, besteht.

2. Füllstoffmischung nach Anspruch 1, **dadurch gekennzeichnet, dass** beide Bestandteile bis zu 75 Gew.% bezogen auf den Anteil der thermoplastischen Heißschmelzkleber im Schuhversteifungsmaterial einsetzbar sind.

3. Füllstoffmischung nach Anspruch 1 oder 2, **dadurch gekennzeichnet, dass** das Reisschalen-Pulver eine Korngrößenverteilung zwischen 1-3000 µm, bevorzugt von 20-800 µm, aufweist.

4. Füllstoffmischung nach einem der Ansprüche 1 bis 3, **dadurch gekennzeichnet, dass** das Polymilchsäure Pulver ein recyceltes Polymilchsäure Pulver ist.

5. Füllstoffmischung nach einem der Ansprüche 1 bis 4, **dadurch gekennzeichnet, dass** sie anorganischen Füllstoff in einer maximalen Menge bis 1 Gew-. % enthält.

6. Thermoplastische Schuhversteifungsmaterialien unter Verwendung einer Füllstoffmischung nach einem der Ansprüche 1 bis 5, enthaltend thermoplastische Heizschmelzkleber, **dadurch gekennzeichnet, dass** sie durch Extrusion und/oder Coextrusion erhältlich sind.

7. Thermoplastische Schuhversteifungsmaterialien unter Verwendung einer Füllstoffmischung nach einem der Ansprüche 1, 3 bis 5, enthaltend thermoplastische Heizschmelzkleber, **dadurch gekennzeichnet, dass** die Schuhversteifungsmaterialien durch ein Verfahren auf einer Doppelbandanlage erhältlich sind.

8. Thermoplastische Schuhversteifungsmaterialien nach Anspruch 7, **dadurch gekennzeichnet, dass** sie ein- oder beidseitig mit einem Trägermaterial versehen sind.

9. Thermoplastische Schuhversteifungsmaterialien unter Verwendung einer Füllstoffmischung nach einem der Ansprüche 1 bis 5, enthaltend thermoplastische Heizschmelzkleber, **dadurch gekennzeichnet, dass** die thermoplastischen Heißschmelzkleber ausgewählt sind aus linearen Polyestern bis zu 50 Gew.-%, Ethylen-Vinylacetat-Copolymeren bis zu 30 Gew.-% und thermoplastischen Polyurethanen bis zu 50 Gew-% und/oder aus Mischungen dieser Kunststoffe.

10. Verwendung der Schuhversteifungsmaterialien nach einem der Ansprüche 6 bis 9 zur Herstellung von Schuhteilen.

## Claims

1. A filler mixture for producing thermoplastic shoe-reinforcing materials containing thermoplastic hot melt adhesives, **characterized in that** they consist of:
a. rice husk powder in an amount up to 50% by weight,
b. polylactic acid powder up to 70% by weight.

2. The filler mixture according to claim 1, **characterized in that** both ingredients can be used in amounts up to 75% by weight, based on the amount of thermoplastic hot-melt adhesives in the shoe-reinforcing material.

3. The filler mixture according to claim 1 or 2, **characterized in that** the rice husk powder has a grain size distribution between 1 and 3000 µm, preferably 20 to 800 µm.

4. The filler mixture according to any one of claims 1 to 3, **characterized in that** the polylactic acid powder is a recycled polylactic acid powder.

5. The filler mixture according to any one of claims 1 to 4, **characterized in that** it contains inorganic filler in a maximum amount of up to 1% by weight.

6. A thermoplastic shoe-reinforcing materials using a filler mixture according to any one of claims 1 to 5, containing thermoplastic hot-melt adhesives, **characterized in that** they can be obtained by extrusion and/or coextrusion.

7. The thermoplastic shoe-reinforcing materials using a filler mixture according to any one of claims 1, 3 to 5, containing thermoplastic hot-melt adhesives, **characterized in that** the shoe-reinforcing materials can be obtained by a method carried out on a doublebelt installation.

8. The thermoplastic shoe-reinforcing materials according to claim 7, **characterized in that** they are provided with a carrier material on one or both sides.

9. The thermoplastic shoe-reinforcing materials using a filler mixture according to any one of claims 1 to 5, containing thermoplastic hot-melt adhesives, **characterized in that** the thermoplastic hot-melt adhesives are selected from up to 50% by weight linear polyesters, up to 30% by weight ethylene-vinyl acetate copolymers and up to 50% by weight thermoplastic polyurethanes and/or blends of these plastics.

10. Use of the shoe-reinforcing materials according to any one of claims 6 to 9 for producing shoe parts.

## Revendications

1. Mélange de charges destiné à la fabrication de matériaux thermoplastiques permettant de rigidifier des chaussures et contenant des colles thermofusibles thermoplastiques, **caractérisé en ce qu'**il est constitué de :
a) balle de riz en poudre dans une quantité allant jusqu'à 50 % en poids
b) jusqu'à 70 % en poids d'acide polylactique en poudre.

2. Mélange de charges selon la revendication 1, **caractérisé en ce que** les deux constituants peuvent être mis en oeuvre jusqu'à représenter 75 % en poids, par rapport à la proportion des colles thermofusibles thermoplastiques dans le matériau permettant de rigidifier des chaussures.

3. Mélange de charges selon les revendications 1 ou 2, **caractérisé en ce que** la balle de riz en poudre présente une granulométrie comprise entre 1 et 3.000 µm, de préférence entre 20 et 800 µm.

4. Mélange de charges selon l'une des revendications 1 à 3, **caractérisé en ce que** ladite acide polylactique en poudre est de l'acide polylactique en poudre recyclé.

5. Mélange de charges selon l'une des revendications 1 à 4, **caractérisé en ce qu'**il contient des charges inorganiques dans une quantité inférieure ou égale à 1 % en poids.

6. Matériaux thermoplastiques permettant de rigidifier des chaussures lesquels impliquent l'utilisation d'un mélange de charges selon l'une des revendications 1 à 5 et contiennent des colles thermofusibles thermoplastiques, **caractérisés en ce qu'**ils peuvent être obtenus par extrusion et/ou coextrusion.

7. Matériaux thermoplastiques permettant de rigidifier des chaussures lesquels impliquent l'utilisation d'un mélange de charges selon l'une des revendications 1, 3 à 5 et contiennent des colles thermofusibles thermoplastiques, **caractérisés en ce que** les matériaux permettant de rigidifier des chaussures peuvent être obtenus par un procédé mis en oeuvre sur une installation à double bande.

8. Matériaux thermoplastiques permettant de rigidifier des chaussures selon la revendication 7, **caractérisés en ce qu'**ils sont pourvus, sur l'une de leurs faces ou sur les deux, d'un matériau de support.

9. Matériaux thermoplastiques permettant de rigidifier des chaussures, lesquels impliquent l'utilisation d'un mélange de charges selon l'une des revendications 1 à 5 et lesquels contiennent des colles thermofusibles thermoplastiques, **caractérisés en ce que** les colles thermofusibles thermoplastiques sont choisies parmi les polyesters linéaires jusqu'à 50 % en poids, les copolymères éthylène/acétate de vinyle jusqu'à 30 % en poids et les polyuréthanes thermoplastiques jusqu'à 50 % en poids et/ou parmi les mélanges desdites matières plastiques.

10. Utilisation des matériaux permettant de rigidifier des chaussures selon l'une des revendications 6 à 9 pour fabriquer des éléments de chaussures.
